# EUROPÄISCHE PATENTSCHRIFT

(11) **EP 3 696 889 B1**
(45) Veröffentlichungstag und Bekanntmachung des Hinweises auf die Patenterteilung: **07.07.2021**
(21) Anmeldenummer: 20154867.4
(22) Anmeldetag: 31.01.2020
(51) Int. Cl.: H01M 4/13, B03B 5/72, H01M 10/0525, H01M 10/54

(54) **VERFAHREN UND VORRICHTUNG ZUM ENTSCHICHTEN VON BESCHICHTETEN FOLIEN**
METHOD AND DEVICE FOR REMOVING COATINGS FROM COATED FILMS
PROCÉDÉ ET DISPOSITIF DE DÉCAPAGE DE FEUILLES REVÊTUES

(30) Priorität: 12.02.2019 DE 102019103424
(43) Veröffentlichungstag der Anmeldung: 19.08.2020
(73) Patentinhaber: Sporer PCS GmbH parts cleaning solutions, 08606 Mühlental (DE)
(72) Erfinder: Schmetzer, Andreas, 08606 Mühlental (DE)
(74) Vertreter: Flosdorff, Jürgen

(56) Entgegenhaltungen:
- WO-A1-2008/102240
- CN-A- 104 157 924
- CN-A- 106 229 451
- CN-A- 109 216 819

## Beschreibung

Die Erfindung betrifft allgemein die Entschichtung von Folien, die einseitig oder beidseitig mit einer Beschichtung versehen sind. Insbesondere betrifft die Erfindung das Recycling von Lithium-Ionen-Akkumulatoren, was deshalb interessant ist, weil die heutigen Lithium-Ionen-Akkumulatoren neben Aluminium und Kupfer als Folien der Kathode und der Anode auch seltene Metalle wie Nickel, Kobalt, Mangan und Lithium in der hauchdünnen Beschichtung enthalten.

Die Erfindung betrifft aber auch andere Metallkombinationen beschichteter Folien, die in Zukunft für Akkumulatoren von Elektroautos infrage kommen.

Außerdem betrifft die Erfindung eine Vorrichtung zur Durchführung des Verfahrens.

Die hauptsächlichen Schritte des Recyclings von Batterien aus der Elektromobilität sind:
- die Deaktivierung und Entladung der Akkumulatoren;
- Demontage der Batteriesysteme und
- Prozesse zur Materialtrennung.

Die vorliegende Erfindung befasst sich mit dem letztgenannten Vorgang.

CN 104 157 924 A gibt eine Vorrichtung und ein Verfahren zum Ablösen von aktivem Material von einem Stromsammler einer Elektrode einer Lithiumionenbatterie an. Hierzu wird die Elektrode durch verschiedene Stationen der Vorrichtung geführt. Nach Einspeisung der Elektrode in der ersten Station wird diese in einer direkt benachbarten Station mittels durch Düsen erzeugten Wasserstrahlen vom aktiven Material befreit. Das aktive Material wird in einer Art Wanne gesammelt.

WO 2008/102240 A1 gibt eine Vorrichtung und ein Verfahren zum Ablösen von aktivem Material von einem Stromsammler einer Elektrode einer Batterie an. Hierbei werden, nachdem die Stromsammlerfolie bereits von der größten Menge an aktivem Material befreit wurde, letzte Rest des aktiven Materials mittels einer Wasserstrahlreinigung in einer Station entfernt.

Der vorliegenden Erfindung liegt die Aufgabe zugrunde, ein Verfahren zur zerstörungsfreien Ablösung der Beschichtungen von Metallfolien zur Wiedergewinnung der Beschichtungen und der Folien anzugeben. Dabei dürfen die Folien, die sehr dünn sind, und zwar in der Größenordnung von 0,25 Mikrometer, nicht zerstört werden, da anderenfalls die gewonnene Beschichtung durch Folienschnipsel verunreinigt und damit unbrauchbar würde. Außerdem soll eine Vorrichtung zur Durchführung des Verfahrens angegeben werden.

Diese Aufgabe wird erfindungsgemäß durch die Merkmale der Patentansprüche 1 und 11 gelöst.

Vorteilhafte Ausgestaltungen der Erfindung sind in den Unteransprüchen gekennzeichnet.

Das erfindungsgemäße Verfahren zur Entschichtung von vorzugsweise metallischen Folien sieht vor, dass die Folien zwischen zwei übereinander angeordneten perforierten Kunststofflaufbändern, die parallel zueinander in derselben Richtung ablaufen, transportiert und an Hochdruckdüsen vorbeigeführt werden, die Wasserstrahlen mit hohem Druck auf die Laufbänder richten, wobei sich die Beschichtung ablöst, und dass die abgelöste Beschichtung mit dem abfließenden Wasser zu einer Filtereinrichtung abtransportiert wird und von der Filtereinrichtung aus dem Wasser ausgefiltert wird.

Bei den Folien handelt es sich bevorzugt um Kathoden und Anoden aus Lithium-Ionen-Akkumulatoren, wie sie bei der Elektromobilität eingesetzt werden. Die Folien bestehen in diesem Fall aus Metall, nämlich aus Kupfer und Aluminium, und sind beidseitig mit wertvollen Metallen beschichtet.

Im Falle der beidseitigen Beschichtung sind die Hochdruckdüsen so angeordnet, dass sie Wasserstrahlen mit hohem Druck von oben und von unten auf die Laufbänder richten, und zwar an in Längsrichtung der Laufbänder beabstandeten Positionen. Dies bedeutet, dass die Wasserstrahlen durch ein perforiertes Laufband hindurch zuerst auf eine Seite einer Folie auftreffen. Damit die Folie durch den hohen Druck nicht zerstört wird, wird die Folie an der der Entschichtung gegenüberliegenden Seite auf ihrem Kunststofflaufband über eine dort angeordnete biegesteife Platte gezogen, die die Laufbänder mit der dazwischen angeordneten Folie abstützt. Anschließend wird die Folie an der anderen Seite von den Strahlen der gegenüber angeordneten Hochdruckdüsen getroffen, wobei eine diesen Hochdruck-düsen gegenüberliegende biegesteife Platte die Folie abstützt, so dass sie nicht beschädigt oder zerstört wird.

Das Verfahren ist natürlich auch zur entsprechenden Entschichtung von einseitig mit einer Beschichtung versehenen Folien anwendbar. Die Folien können auch aus einem Nicht-Metall bestehen.

Das erfindungsgemäße Verfahren verwendet als Medium zum Entschichten Wasser bevorzugt ohne Zusatz von Chemikalien.

In einer Ausgestaltung des Verfahrens ist vorgesehen, dass die beiden Laufbänder mit einer geringfügigen Differenzgeschwindigkeit umlaufen. Hierdurch ist eine evtl. unvollständige Entschichtung infolge der Abdeckung durch die Laufbänder vermieden, da zusätzliche mechanische Ablösungskräfte hervorgerufen werden.

Die abgelöste Beschichtung wird von dem abfließenden Wasser bevorzugt in eine unter den Laufbänder angeordnete Wanne abtransportiert, aus der das Wasser mit der abgelösten Beschichtung in eine Filtereinrichtung fließt. Hierbei kann es sich um einen Vollstromfilter handeln, der die abgelöste Beschichtung aus dem Wasser ausfiltert. Die ausgefilterte abgelöste Beschichtung wird anschließend in einer Trockeneinrichtung getrocknet.

Das in der Filtereinrichtung gefilterte Wasser wird mit besonderem Vorteil über Pumpen wieder den Hochdruckdüsen zugeführt.

In näheren Einzelheiten wird vorgeschlagen, dass dünne Laufbänder mit einer Dicke von 0,1 bis 0,35, vorzugsweise von 0,25 mm, bei dem Verfahren verwendet werden. Die Laufbänder können aus gewebeverstärktem Kunststoff bestehen.

Die Löcher in den Laufbänder sollten einen Durchmesser von 10 bis 30, vorzugsweise 20 mm haben. Der Druck der Hochdruckdüsen sollte im Bereich zwischen 20 bis 200 bar je nach Anwendungsfall liegen. Als Laufgeschwindigkeit der Bänder werden 1 m/min bis 8 m/min mit Vorteil vorgeschlagen, wobei die von den Folien zurückzulegende Strecke bevorzugt 2 m bis 9 m beträgt.

Die erfindungsgemäße Vorrichtung zur Durchführung des Verfahrens enthält zwei übereinander angeordnete perforierte dünne Kunststofflaufbänder, die so angeordnet sind, dass der untere Strang des oberen Laufbandes in einem kleinen Abstand über dem oberen Strang des unteren Laufbandes angeordnet ist, wobei beide Stränge parallel zueinander verlaufen und in derselben Richtung angetrieben werden. Die mit Pumpen verbundenen Hochdruckdüsen sind so eingestellt, dass sie Wasserstrahlen von beiden Seiten auf die Stränge der Kunststofflaufbänder richten, wobei in den Bereichen der Hochdruckdüsen biegesteife Platten angeordnet sind, die die Kunststofflaufbänder gegen Durchbiegung infolge der auftreffenden Wasserstrahlen abstützen, um eine Zerstörung der Folien zu verhindern. Unter den Laufbändern ist eine Wanne angeordnet, in die das Wasser mit der abgelösten Beschichtung abfließt. Die Wanne ist durch eine Leitung mit einer Filtereinrichtung verbunden, der ein Wassertank nachgeordnet ist, der über Leitungen mit den beiden Pumpen in Verbindung steht.

Das erfindungsgemäße Verfahren ermöglicht auf die Umgebung schonende und wirtschaftliche Weise die zerstörungsfreie Ablösung der Beschichtungen von Folien zur Wiedergewinnung der Beschichtungen und gegebenenfalls der Folien, und zwar unter Einsatz von Wasser ohne jegliche Chemikalien.

Weitere Einzelheiten der Erfindung ergeben sich aus der nachfolgenden Beschreibung einer bevorzugten Ausführungsform der Erfindung sowie anhand der Zeichnungen. Dabei zeigen auf rein schematische Weise:
- Figur 1: das Schema einer Vorrichtung zur Durchführung des erfindungsgemäßen Verfahrens und
- Figur 2: eine rein schematische Darstellung eines Abschnitts eines perforierten aus Kunststoff bestehenden Laufbandes.

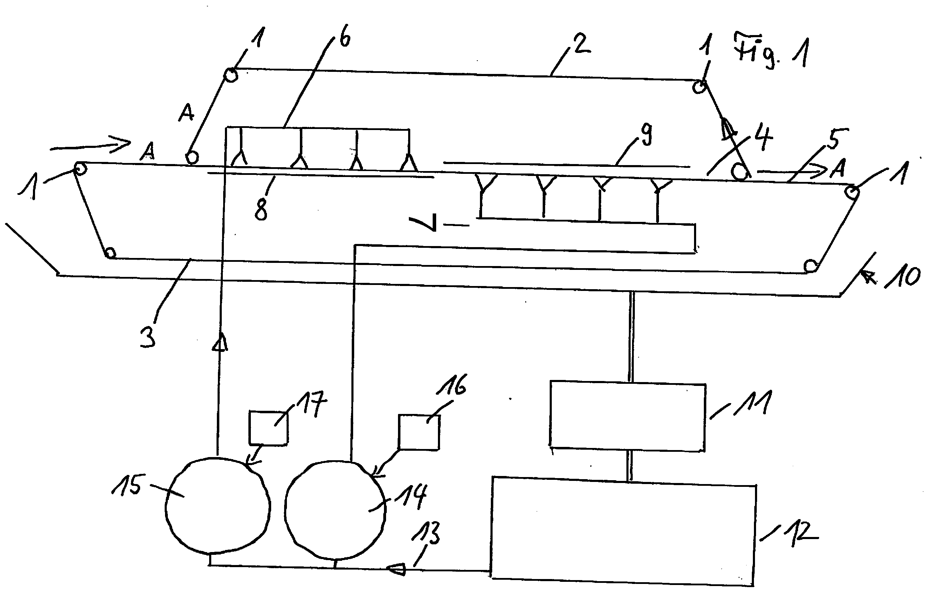

Figur 1 zeigt rein schematisch eine Ausführungsform der Vorrichtung zum Entschichten von beschichteten Folien. Die Vorrichtung enthält zwei übereinander angeordnete, über Rollen 1 geführte Kunststofflaufbänder 2, 3. Der untere Strang 4 des oberen Kunststofflaufbandes 2 verläuft parallel zu dem oberen Strang 5 des unteren Kunststofflaufbandes 3 und in einem sehr kleinen Abstand von einigen µm über diesem. Die Laufrichtung der beiden Kunststofflaufbänder 2 und 3 sind durch Pfeile A dargestellt. Der obere Strang 5 des unteren Laufbandes 3 hat eine größere Erstreckung als der obere Strang 4 und überragt diesen an beiden Endbereichen. Dies ermöglicht es, die zu entschichtenden Folien an dem in der Figur 1 linken Endbereich auf den oberen Strang 5 des unteren Laufbandes 3 aufzulegen, so dass die Folien zwischen den beiden Strängen 4, 5 in der Figur nach rechts transportiert werden.

Oberhalb der Stränge 4, 5 ist ein erster Bereich von Hochdruckdüsen (6) in dem Zwischenraum zwischen dem unteren Strang 4 und dem oberen Strang des Kunststoffbandes 2 angeordnet und richtet seine Strahlen auf die zwischen den Strängen 4 und 5 transportierten Folien. An der den Strahlen gegenüber liegenden Seite der Stränge 4, 5 ist eine biegefeste Platte 8 angeordnet, die die Kunststofflaufbänder mit der Folie abstützt, so dass die Folien nicht durch die auftreffenden Wasserstrahlen zerstört werden können.

In Laufrichtung stromabwärts ist ein zweites Feld mit mehreren Hochdruckdüser (7) unterhalb des oberen Strangs 5 des Kunststofflaufbandes 3 angeordnet und richtet seine Strahlen nach oben auf die durchlaufenden Folien. Auf der gegenüberliegenden Seite ist oberhalb des unteren Strangs 4 des oberen Kunststofflaufbandes 2 eine weitere biegesteife Platte 9 angeordnet, die eine Durchbiegung der beiden Stränge 4, 5 mit den Folien nach oben verhindert. Dieses Feld der Hochdruckdüsen (7) befindet sich in dem Zwischenraum zwischen dem oberen Strang 5 und dem unteren Strang des unteren Kunstofflaufbandes 3.

Die entschichteten Folien treten aus dem Zwischenraum zwischen den Strängen 4, 5 aus und werden am rechten Endabschnitt des oberen Strangs 5 entnommen.

Unterhalb des unteren Kunststofflaufbandes 3 befindet sich eine Wanne 10, in die das Wasser mit der abgelösten Beschichtung fällt. Vom Boden der Wanne 10 führt eine Leitung zu einem darunter angeordneten Filter 11, in dem die abgelöste Beschichtung aus dem Wasser gefiltert wird, wobei das Wasser durch eine weitere Leitung in einen Tank 12 fließt, der über Saugleitungen 13 mit Hochdruckpumpen 14, 15 verbunden ist, die das Wasser wieder den Hochdruckdüsen 6, 7 zuführen. Die Pumpen 14, 15 sind über Frequenzumrichter 16, 17 geregelt.

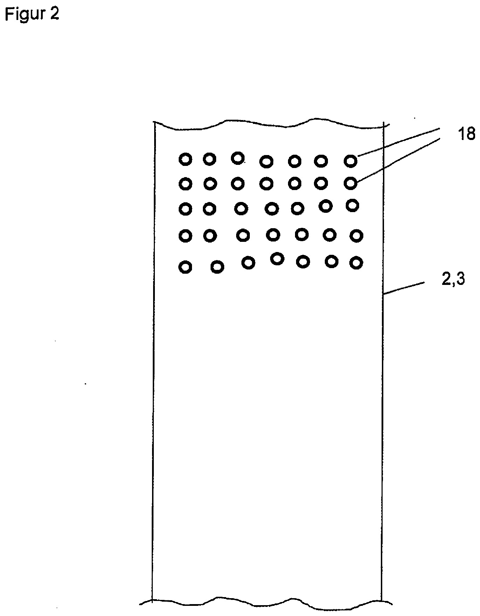

Figur 2 zeigt rein schematisch einen Abschnitt eines Kunststofflaufbandes 2 oder 3. Das Kunststofflaufband ist perforiert mit dicht beieinander liegenden Löchern 18. Die Seitenränder der Laufbänder sind nicht perforiert.

Es wird betont, dass die Erfindung nicht auf die beschriebenen und dargestellten Ausführungsformen beschränkt ist. Vielmehr sind alle offenbarten Merkmale auf jede sinnvolle Weise einzeln miteinander im Rahmen der nachfolgenden Ansprüche kombinierbar.

## Patentansprüche

1. Verfahren zur Entschichtung von vorzugsweise beidseitig mit einer Beschichtung versehenen metallischen Folien,
**dadurch gekennzeichnet,**
**dass** die Folien zwischen zwei übereinander angeordneten perforierten Kunststofflaufbändern (2,3) transportiert und an Hochdruckdüsen (6,7) vorbei geführt werden, die von oben und/oder unten Wasserstrahlen mit hohem Druck auf die Folien zwischen den Kunststofflaufbändern (2,3) richten, wobei sich die Beschichtung ablöst,
und **dass** die abgelöste Beschichtung mit dem abfließenden Wasser zu einer Filtereinrichtung (11) abtransportiert und von dieser aus dem Wasser ausgefiltert wird.

2. Verfahren nach Anspruch 1,
**dadurch gekennzeichnet,**
**dass** die Folien Katoden und Anoden aus Lithium-Ionen-Akkumulatoren sind.

3. Verfahren nach Anspruch 1 oder 2,
**dadurch gekennzeichnet,**
**dass** Wasser ohne Zusatz von Chemikalien verwendet wird.

4. Verfahren nach einem der Ansprüche 1 bis 3,
**dadurch gekennzeichnet,**
**dass** wenigstens eine Reihe von Hochdruckdüsen (6) oberhalb des unteren Strangs (4) des oberen Kunststofflaufbandes (2) und/oder wenigstens eine Reihe von Hochdruckdüsen (7) unterhalb des oberen Strangs (5)des unteren Kunststofflaufbandes (3) angeordnet sind und dass jeweils an der den Hochdruckdüsen (6,7) gegenüber liegende Seite der Stränge (4,5) biegesteife Platten (8,9) angeordnet sind, an denen die Stränge (4,5) infolge des Drucks der einwirkenden Wasserstrahlen anliegen.

5. Verfahren nach einem der Ansprüche 1 bis 4,
**dadurch gekennzeichnet,**
**dass** die beiden Kunststofflaufbänder (2,3) mit einer geringfügigen Differenzgeschwindigkeit umlaufen.

6. Verfahren nach einem der Ansprüche 1 bis 5,
**dadurch gekennzeichnet,**
**dass** das in der Filtereinrichtung (11) gefilterte Wasser über Pumpen (14,15) wieder den Hochdruckdüsen (6,7) zugeführt wird.

7. Verfahren nach einem der Ansprüche 1 bis 6,
**dadurch gekennzeichnet,**
**dass** die ausgefilterte abgelöste Beschichtung in einer Trockeneinrichtung getrocknet wird.

8. Verfahren nach einem Ansprüche 1 bis 7,
**dadurch gekennzeichnet,**
**dass** die Kunststofflaufbänder (2,3) eine Dicke von 0,1 bis 0,35, vorzugsweise von 0,25 mm haben.

9. Verfahren nach einem der Ansprüche 1 bis 8,
**dadurch gekennzeichnet,**
**dass** die Löcher in den Kunststofflaufbändern (2,3) einen Durchmesser von 10 bis 30, vorzugsweise 20 mm haben.

10. Verfahren nach einem der Ansprüche 1 bis 9,
**dadurch gekennzeichnet,**
**dass** der Druck der Hochdruckdüsen (6,7) zwischen 20 bis 200 bar beträgt.

11. Vorrichtung zur Durchführung des Verfahrens nach einem der Ansprüche 1 bis 10,
**gekennzeichnet durch**
zwei übereinander angeordneten perforierte Kunststofflaufbänder (2,3), die so angeordnet sind, dass der untere Strang (4) des oberen Kunststofflaufbandes (2) in einem kleinen Abstand über dem oberen Strang (5) des unteren Kunststofflaufbandes (3) angeordnet ist und beide Stränge (4,5) parallel zueinander verlaufen und in derselben Richtung angetrieben werden, mehrere mit Pumpen (14,15) verbundene Hochdruckdüsen (6,7), die so eingestellt sind, dass sie Wasserstrahlen auf die Stränge der Kunststofflaufbänder richten, wobei oberhalb der Stränge (4,5) ein erster Bereiche von Hochdruckdüsen (6) in dem Zwischenraum zwischen dem unteren Strang (4) und dem oberen Strang des oberen Kunststofflaufbandes (2) angeordnet ist und seine Strahlen auf die zwischen den Strängen (4, 5) transportierten Folien richtet und stromabwärts ein zweiter Bereich mit mehreren Hochdruckdüsen (7) unterhalb des oberen Stranges (5) des unteren Kunststofflaufbandes (3) angeordnet ist, der seine Strahlen nach oben auf die durchlaufenden Folien richtet,
biegesteife Platten (8, 9), die auf den den Hochdruckdüsen gegenüber liegenden Seiten der Stränge (4, 5) der Kunststofflaufbänder (3) angeordnet sind und den Hochdruckdüsen (6, 7) gegenüber liegen,
und eine Wanne (10) unter den Kunststoffbändern (2, 3), die mit einer Filtereinrichtung (11) verbunden ist.

12. Vorrichtung nach Anspruch 11,
**dadurch gekennzeichnet,**
**dass** die Filtereinrichtung (11) mit einem Wassertank (12) verbunden ist, der über Leitungen mit den beiden Pumpen (14,15) in Verbindung steht.

## Claims

1. A method of removing coatings from metallic films provided with a coating, preferably on both sides, **characterised in that** the films are transported between two perforated plastic conveyor belts (2,3) arranged above one another and are conducted past high pressure nozzles (6,7), which direct water jets with high pressure from above and/or below onto the films between the plastic conveyor belts (2,3), whereby the coating becomes detached, and that the detached coating is transported away with the running off water to a filter device (11) and is filtered out of the water by it.

2. A method as claimed in Claim 1, **characterised in that** the films are cathodes and anodes from lithium-ion batteries.

3. A method as claimed in Claim 1 or 2, **characterised in that** water is used without the addition of chemicals.

4. A method as claimed in one of Claims 1 to 3, **characterised in that** at least one row of high pressure nozzles (6) is arranged above the lower run (4) of the upper plastic conveyor belt (2) and/or at least one row of high pressure nozzles (7) is arranged below the upper run (5) of the lower plastic conveyor belt (3) and that rigid plates (8,9) are arranged in each case on the side of the runs (4,5) opposite to the high pressure nozzles (6,7), which are engaged by the runs (4,5) as a result of the pressure of the water jets acting on them.

5. A method as claimed in one of Claims 1 to 4, **characterised in that** the two plastic conveyor belts (2,3) rotate with a small difference in speed.

6. A method as claimed in one of Claims 1 to 5, **characterised in that** the water filtered in the filter device (11) is supplied again to the high pressure nozzles (6,7) by means of pumps (14,15).

7. A method as claimed in one of Claims 1 to 6, **characterised in that** the detached coating which is filtered out is dried in a drying device.

8. A method as claimed in one of Claims 1 to 7, **characterised in that** the plastic conveyor belts (2,3) have a thickness of 0.1 to 0.35, preferably of 0.25 mm.

9. A method as claimed in one of Claims 1 to 8, **characterised in that** the holes in the plastic conveyor belts (2,3) have a diameter of 10 to 30, preferably 20 mm.

10. A method as claimed in one of Claims 1 to 9, **characterised in that** the pressure of the high pressure nozzles (6,7) is between 20 and 200 bar.

11. Apparatus for carrying out the method as claimed in one of Claims 1 to 10, **characterised by** two perforated plastic conveyor belts (2,3) arranged above one another, which are so arranged that the lower run (4) of the upper plastic conveyor belt (2) is arranged at a small distance above the upper run (5) of the lower plastic conveyor belt (3) and the two runs (4,5) extend parallel to one another and are driven in the same direction, a plurality of high pressure nozzles (6,7), which are connected to pumps (14,15) and are so set that they direct water jets onto the runs of the plastic conveyor belts, whereby arranged above the runs (4,5) there is a first group of high pressure nozzles (6) in the gap between the lower run (4) and the upper run of the upper plastic conveyor belt (2) and directs its jets onto the films transported between the runs (4, 5) and arranged downstream there is a second group with a plurality of high pressure nozzles (7) below the upper run (5) of the lower plastic conveyor belt, which directs its jets upwardly onto the films passing through, rigid plates (8, 9), which are arranged on the sides of the runs (4, 5) of the plastic conveyor belts (3) opposite to the high pressure nozzles and are opposite to the high pressure nozzles (6, 7), and a tank (10) below the plastic conveyor belts (2, 3), which is connected to a filter device (11).

12. Apparatus as claimed in Claim 11, **characterised in that** the filter device (11) is connected to a water tank (12), which is connected by means of conduits to the two pumps (14, 15).

## Revendications

1. Procédé de décapage de feuilles métalliques pourvues de préférence des deux côtés d'un revêtement,
**caractérisé en ce**
**que** les feuilles sont transportées entre deux tapis roulants en matière plastique (2, 3) perforés disposés l'un par-dessus l'autre et sont guidées le long de buses haute pression (6, 7), qui dirigent depuis le haut et/ou depuis le bas des jets d'eau à pression élevée sur les feuilles entre les tapis roulants en matière plastique (2, 3), dans lequel le revêtement se décolle,
et **que** le revêtement décollé est évacué avec l'eau sortante vers un dispositif filtrant (11) et est éliminé par filtration par celui-ci de l'eau.

2. Procédé selon la revendication 1,
**caractérisé en ce**
**que** les feuilles sont des cathodes et des anodes composées d'accumulateurs au lithium-ion.

3. Procédé selon la revendication 1 ou 2,
**caractérisé en ce**
**que** l'eau est utilisée sans ajout de produits chimiques.

4. Procédé selon l'une quelconque des revendications 1 à 3,
**caractérisé en ce**
**qu'**au moins une rangée de buses haute pression (6) est disposée au-dessus du brin inférieur (4) du tapis roulant en matière plastique supérieur (2) et/ou au moins une rangée de buses haute pression (7) est disposée en-dessous du brin supérieur (5) du tapis roulant en matière plastique inférieur (3), et que sont disposées respectivement sur le côté, faisant face aux buses haute pression (6, 7), des brins (4, 5), des plaques plus rigides en flexion (8, 9), sur lesquelles les brins (4, 5) reposent sous l'effet de la pression exercée par les jets d'eau.

5. Procédé selon l'une quelconque des revendications 1 à 4,
**caractérisé en ce**
**que** les deux tapis roulants en matière plastique (2, 3) circulent en rotation à une vitesse différentielle modérée.

6. Procédé selon l'une quelconque des revendications 1 à 5,
**caractérisé en ce**
**que** l'eau filtrée dans le dispositif filtrant (11) est amenée à nouveau aux buses haute pression (6, 7) par l'intermédiaire de pompes (14, 15).

7. Procédé selon l'une quelconque des revendications 1 à 6,
**caractérisé en ce**
**que** le revêtement décollé éliminé par filtration est séché dans un dispositif de séchage.

8. Procédé selon l'une quelconque des revendications 1 à 7,
**caractérisé en ce**
**que** les tapis roulants en matière plastique (2, 3) ont une épaisseur de 0,1 à 0,35, de préférence de 0,25 mm.

9. Procédé selon l'une quelconque des revendications 1 à 8,
**caractérisé en ce**
**que** les trous dans les tapis roulants en matière plastique (2, 3) ont un diamètre de 10 à 30, de préférence de 20 mm.

10. Procédé selon l'une quelconque des revendications 1 à 9,
**caractérisé en ce**
**que** la pression des buses haute pression (6, 7) est comprise entre 20 à 200 bar.

11. Dispositif pour mettre en œuvre le procédé selon l'une quelconque des revendications 1 à 10,
**caractérisé par**
deux tapis roulants en matière plastique (2, 3) perforés disposés l'un au-dessus de l'autre, qui sont disposés de telle sorte que le brin inférieur (4) du tapis roulant en matière plastique supérieur (2) est disposé à une petite distance au-dessus du brin supérieur (5) du tapis roulant en matière plastique inférieur (3) et les deux brins (4, 5) s'étendent de manière parallèle l'un par rapport à l'autre et sont entraînés dans la même direction,
plusieurs buses haute pression (6, 7) reliées à des pompes (14, 15), qui sont réglées de telle sorte qu'elles dirigent des jets d'eau sur les brins des tapis roulants en matière plastique, dans lequel une première zone de buses haute pression (6) est disposée, au-dessus des brins (4, 5), dans l'espace intermédiaire entre le brin inférieur (4) et le brin supérieur du tapis roulant en matière plastique supérieur (2) et dirige ses jets sur les feuilles transportées entre les brins (4, 5) et une deuxième zone avec plusieurs buses haute pression (7) est disposée, en aval, sous le brin supérieur (5) du tapis roulant en matière plastique inférieur (3), laquelle dirige ses jets vers le haut sur les feuilles qui traversent,
des plaques rigides en flexion (8, 9), qui sont disposées sur les côtés, faisant face aux buses haute pression, des brins (4, 5) des tapis roulants en matière plastique (3) et qui font face aux buses haute pression (6, 7),
et un bac (10) sous les tapis en matière plastique (2, 3), qui est relié à un dispositif filtrant (11).

12. Dispositif selon la revendication 11, **caractérisé en ce**
**que** le dispositif filtrant (11) est relié à un réservoir d'eau (12), qui est relié aux deux pompes (14, 15) par l'intermédiaire de conduits.
